Europäisches Patentamt

(19) European Patent Office

Office européen des brevets

(11) Publication number: **0 295 064 B1**

(12) **EUROPEAN PATENT SPECIFICATION**

(45) Date of publication of patent specification: 27.11.91 Bulletin 91/48

(51) Int. Cl.⁵: **F02B 27/02**

(21) Application number: **88305197.1**

(22) Date of filing: **08.06.88**

(54) Variable geometry air intake system.

(30) Priority: 08.06.87 GB 8713363

(43) Date of publication of application: 14.12.88 Bulletin 88/50

(45) Publication of the grant of the patent: 27.11.91 Bulletin 91/48

(84) Designated Contracting States: DE FR IT SE

(56) References cited:
DE-A- 3 446 377
GB-A- 1 012 425
US-A- 2 835 235
PATENT ABSTRACTS OF JAPAN, vol. 10, no. 83 (M-466)[2140], 2nd April 1986; & JP-A-60 224 922 (MAZDA K.K.) 09-11-1985
IDEM
PATENT ABSTRACTS OF JAPAN, vol. 10, no. 207 (M-500)[2263], 19th July 1986; & JP-A-61 49 123 (NISSAN MOTOR CO., LTD) 11-03-1986

(73) Proprietor: TICKFORD LIMITED
8 Tanners Drive Blakelands North
Milton Keynes Buckinghamshire MK14 5BN
(GB)

(72) Inventor: Lyle, Alastair Claude
10 Windmill Avenue
Blisworth Northants NN7 3EQ (GB)
Inventor: Sykes, Richard Geoffrey
14 Church Walk North Crawley
Newport Pagnell Buckinghamshire (GB)

(74) Representative: Wain, Christopher Paul et al
A.A. THORNTON & CO. Northumberland
House 303-306 High Holborn
London WC1V 7LE (GB)

## Description

VARIABLE GEOMETRY AIR INTAKE SYSTEM

The present invention relates to a variable geometry air intake system for use with an internal combustion engine.

The system of the invention may be used with a spark ignition engine or a compression ignition engine.

To obtain a high volumetric efficiency and a high brake mean effective pressure it is necessary to induce as much charge as possible into the cylinder before the inlet valve closes. This can be facilitated using any one or more of three effects.

As the inlet valve opens, it produces a negative pressure pulse running back down the inlet tube against the inflow. On reaching the open end of the tube the pulse is reflected and converted into a positive pressure pulse which travels back towards the inlet valve. If the positive pulse reaches the inlet valve while it is open, it may directly increase the amount of air that flows inward. If the pulse reaches the valve end of the intake tract while the valve is closed the pulse can be reflected backwards and forwards several times and still be of some benefit several cycles later if the positive pulse occurs at the inlet valve when it is next open.

For any one geometrical configuration there are several speeds at which an improvement of volumetric efficiency is achieved and interspersed between these are speeds at which the volumetric efficiency is reduced.

Each beneficial resonance is only effective over a narrow band of the engine speed range. Thus this wave ram effect is only usually of great benefit in an application where maximum engine output is required over a narrow engine speed range.

In order to maintain a particular beneficial resonance at all engine speeds the length of the primary intake pipes has to be shortened as the engine speed is increased.

The second induction ram effect which also takes place in the primary ram pipes is known as the inertia ram effect. Different researchers have considered this effect in two subtly different ways, but in either case the effect is a function of the inertia of the column of gas moving in the primary intake pipes. In one consideration the column of gas flowing in the inlet port is accelerated in the first part of the induction stroke and the inertia of this gas tends to continue the inward flow even when the piston has passed outer dead centre and is reducing the cylinder volume.

In an alternative consideration the volume of gas in the cylinder during the induction process will act as an air spring and this, in conjunction with the mass of air in the inlet tract, creates a resonant spring/mass system.

In either consideration the beneficial effect can be matched to the requirements by changing the cross sectional area and/or the length of the primary intake pipes.

Wave ram and inertia ram both occur in any primary induction pipe and both can be matched to the desired speed by changing the length of the pipe.

Various previous designs have attempted to vary the speed at which either or both types of ram is effective by changing the effective length of the primary induction pipes. One is to provide two, or possibly more, primary intake tubes of different lengths. A valve system controls which tube is used in dependence on the engine speed. The engine system thus has two, or possibly more, points of maximum efficiency from the point of view of this effect. Another solution is as disclosed in U.S. patent no. 2835235, where the primary air intake tube comprises an annular passage defined between two circular walls which are relatively rotatable. Air is introduced into the passage at a point near a closure attached to one wall and spanning the two walls. Relative rotation between the walls changes the length of the passageway between the closure and a fixed exit point on the other wall. A similar system is disclosed in U.S. patent no. 4617897, although it is the intention of that disclosure to change both the length and the cross sectional area of the primary intake tube in discrete steps, furthermore the two changes can be made independently of one another to allow three configurations of primary intake tube. A further example is shown in JP-A-60224922.

A third type of induction tuning is the Helmholtz resonance effect which occurs due to the oscillating mass of the air column in the tube through which air flows into a plenum chamber. The air in the plenum chamber, in all of the primary induction pipes, and that cylinder which has its intake valve open acts as a spring.

The resulting resonance can be matched to the engine speed to provide extra pressure in the inlet system at appropriate points in the induction period.

The resonant frequency of this system may be modified by changes to one or more of three dimensions, the enclosed volume, the length of and diameter of the inlet pipe to the plenum chamber.

The Helmholtz resonance frequency is a function of

$$\sqrt{\frac{A}{L \cdot V}}$$

where

A = Area of the intake tube, by which is meant the connection from the atmosphere to the device;
L =     Length of intake tube ; and
V =     Total enclosed volume of intake system and part of one cylinder.

If the change of dimension of the primary ram pipes has to be directly linked to engine speed, then to optimise also the Helmholtz resonance it may be desirable to change two other dimensions, one of which is L, the length of the intake tube, the other of which may be V, the total enclosed volume.

In order to obtain the most efficient charging of the cylinder, changes in geometry of the intake system are required and the degree of change is quite large. As indicated above, rotary systems are known. However other systems use sliding tube elements, and suffer from the disadvantage of excessive friction and from the fact that they can occupy excessive space in what is a comparatively confined area.

It is an object of the present invention to utilise the above effects to increase the efficiency of the engine over a range of engine speeds, and in as compact an arrangement as possible.

According to the present invention there is provided an intake system for an internal combustion engine comprising an intake tube for supply of air, a plenum chamber in communication with said intake, at least one primary tube communicating between said plenum chamber and a respective cylinder of the engine, at least part of the or each primary tube and at least part of said intake being constituted by respective passageways defined between a cylinder and a barrel relatively rotatable therewithin, characterised in that relative rotation in one sense causes the length of all of said passageways simultaneously to decrease progressively from one length to another between a maximum and a minimum length, and relative rotation in an opposite sense causes the length of all of said passageways simultaneously to increase progressively from one length to another between a minimum and a maximum length.

Preferably the intake and said at least one primary tube extend substantially tangentially from the cylinder.

Advantageously at least part of the interior of the barrel comprises the plenum chamber.

The volume of the plenum chamber may be variable optionally by relative rotation between said barrel and said cylinder.

The amount of relative rotation may be controlled in dependance on the sensed speed of the engine.

The length of the passageways may be continuously variable between two end points.

An embodiment of the present invention will now be more particularly described by way of example and with reference to the accompanying drawings, in which :

FIGURE 1 is a view, partially in section, of a part of a system embodying the invention at a low engine speed ;

FIGURE 2 shows three cross sections of the system of Figure 1, 2a being through a primary tube, 2b through the inlet tube and 2c through a plenum variation blank tube ;

FIGURE 3 is a view at the same point as Figure 1, but at high engine speed ;

FIGURE 4 shows a further three cross sections of the system in the state shown in Fig 3, the cross sections being taken at points corresponding to those of Fig 2 ;

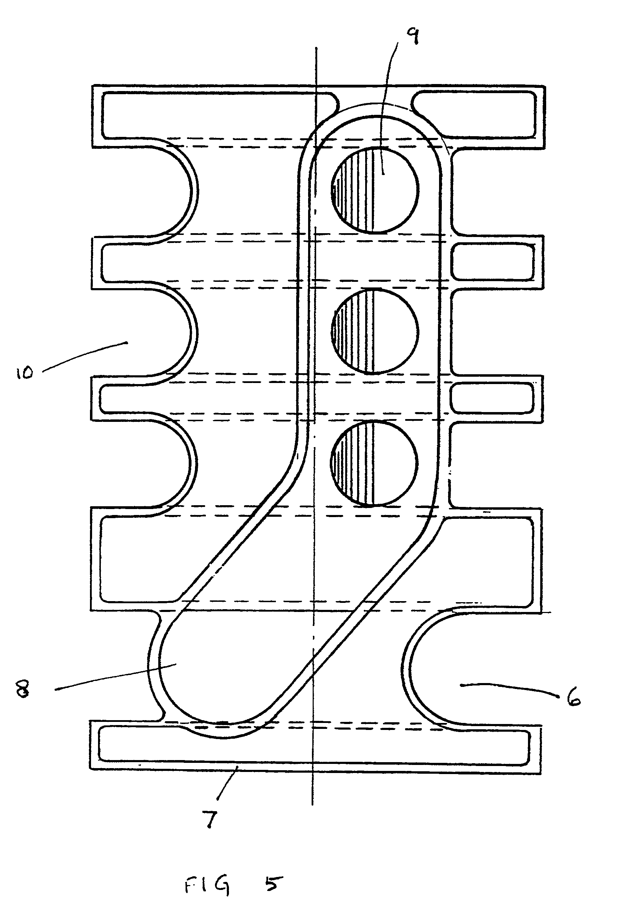

FIGURE 5 is a longitudinal cross-sectional view of a barrel of the system ;

FIGURE 6 is a perspective view of the barrel and illustrates the air flow route ; and

FIGURE 7 is a view, partly in section, partly in elevation of a variant of the system.

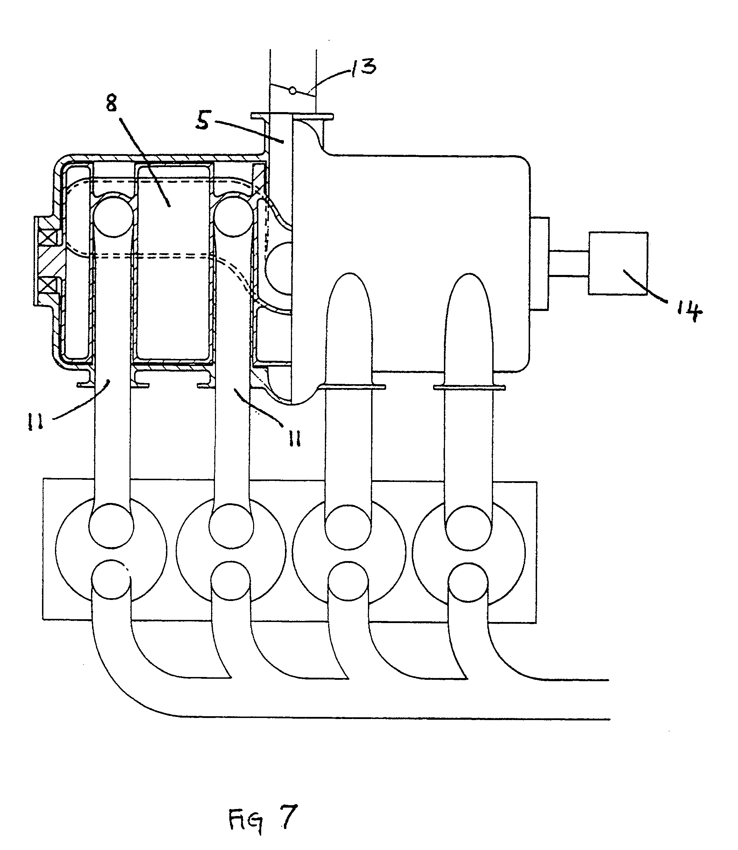

Referring now to the drawings, there is shown an air intake system for a three cylinder engine. Obviously, the system can be enlarged to accommodate additional cylinders by increasing the number of primaries (as indicated in Figure 7), or two individual systems could be connected to a six cylinder engine.

Air flows from an air filter (not shown) optionally via a throttle 13 to an intake tube 5, part of which is constituted by a groove 6 in a barrel 7. The air then passes through an aperture into the interior of the barrel 7 which forms a plenum chamber 8. The air exits from the plenum chamber 8 through one of a plurality of apertures 9 to a respective one of three grooves 10 in the surface of the barrel 7. From there, it passes through primary tube 11 to the injector equipment and the cylinder head.

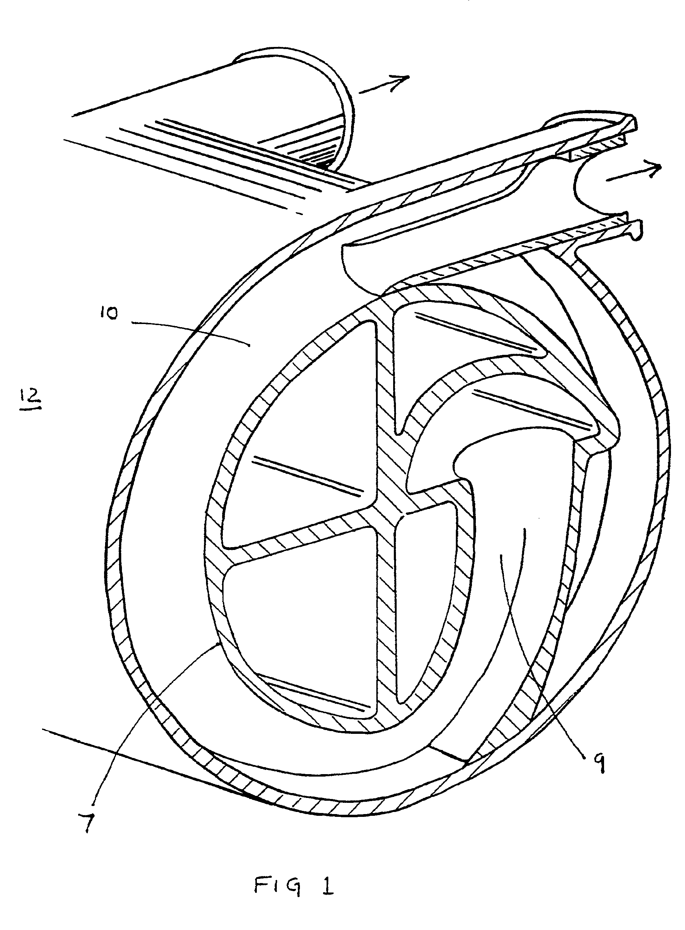

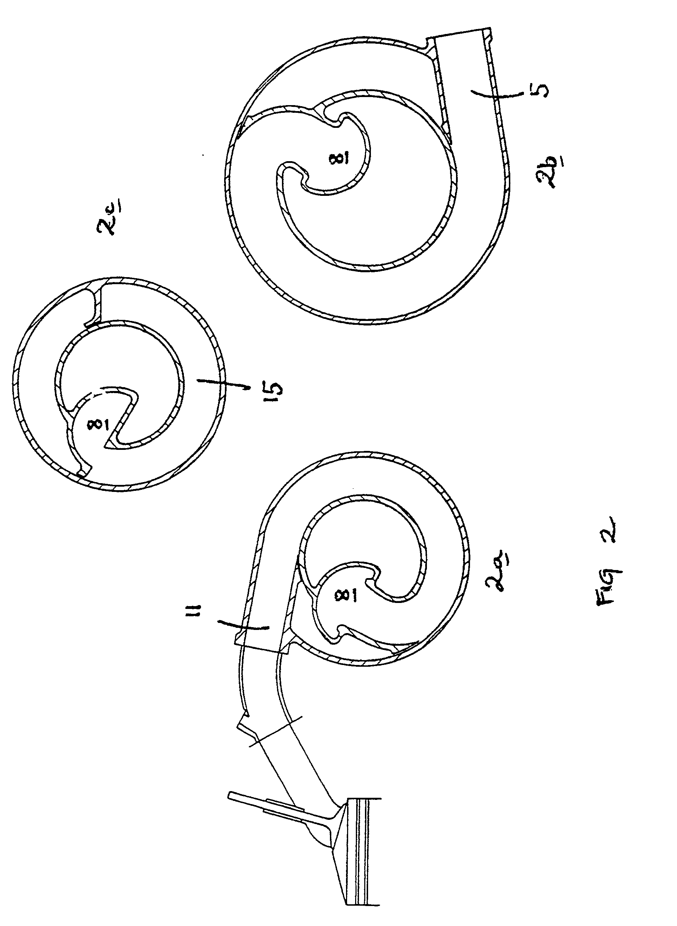

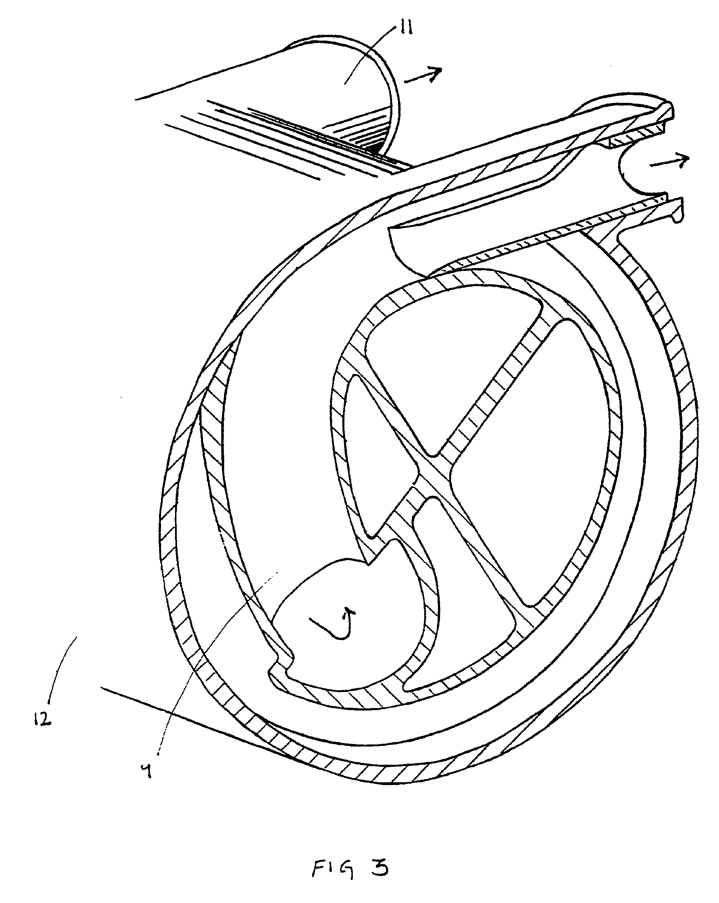

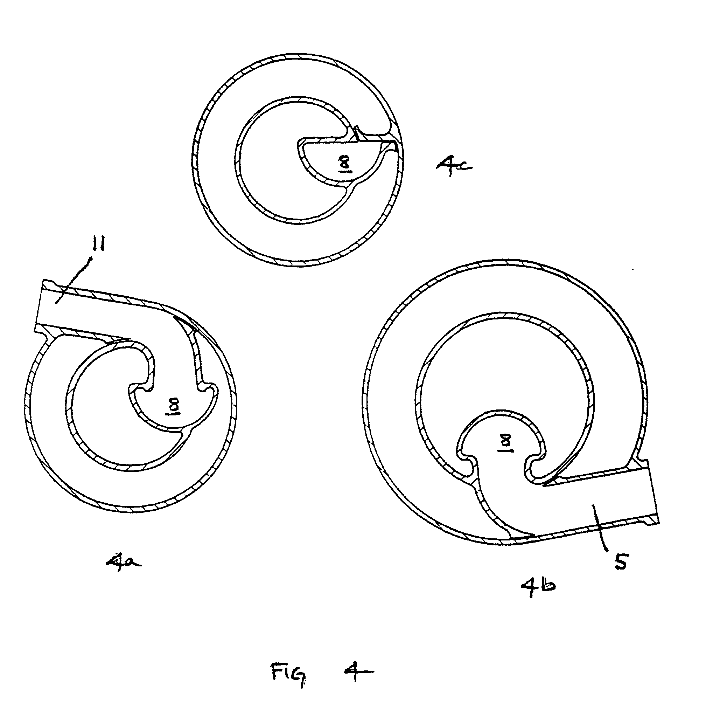

Operation of the system can thus be described with reference to Figures 1 to 4, which show cross-sectional views at two different engine speeds. Figures 1 and 2 illustrate the arrangement at low engine speeds, and it can be seen that the barrel 7 is so located that the air travels along the grooves 6 and 10 for a length subtended by approximately 270°. As the engine speed increases, the optimum length of the tubes decreases and, as can be seen from Figures 3 and 4, the barrel 7 is rotated clockwisely (as seen in Figures 1 and 3 (anticlockwisely in Figs 2 and 4) until the air travels only along a length of the grooves subtended by approximately 90°. Obviously, the barrel can be rotated further to decrease still further the length of the tubes. Rotation may be caused by a synchro motor or a rotary servo 14 connected at one end of the barrel.

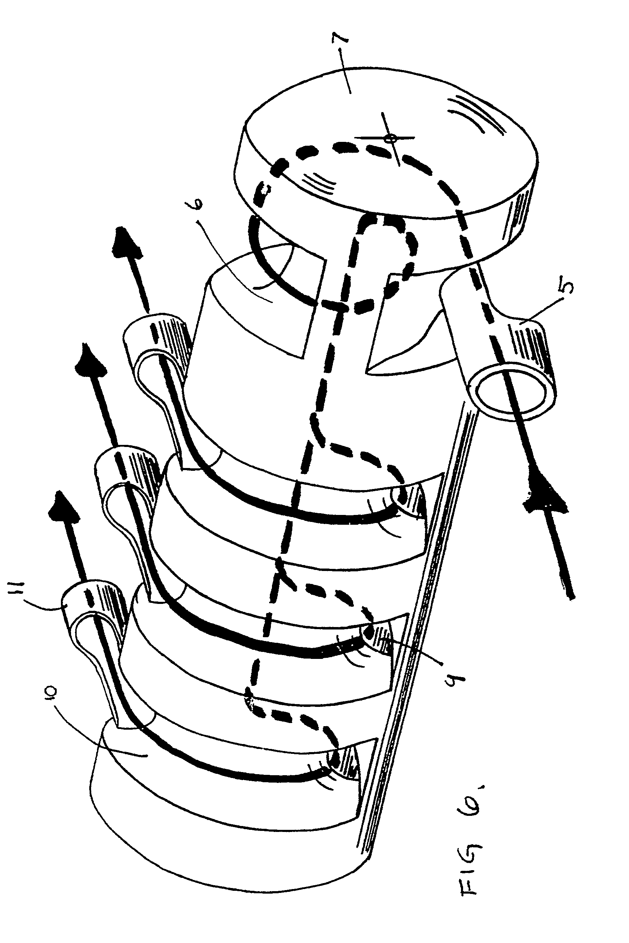

The primary tubes 11 and the intake tube 5 extend substantially tangentially from the cylinder 12, although the intake faces the opposite way to the primary exits. As will be appreciated from Figure 6, as the barrel is rotated to shorten the length of the primaries, the length of the intake is also shortened. Similarly, the lengths are increased by rotation in the opposite direction. Thus, the system utilises not only the wave and inertia ram effects in changing the length of the primaries, but also other effects by changing the length of the intake. Furthermore, the volume of the plenum chamber may be varied on rotation to optimise still further the utilisation of the various effects. This can be achieved by providing the barrel with one or more additional grooves 15 between the other grooves 6 and 10. They may possibly be of greater cross-sectional area than that of the primaries. These are indicated in Figs 2c and 4c. These additional grooves lead to "exits" which are blanked off or otherwise closed. Thus, as the barrel is rotated to change the length of the passageways, the volume of each blanked groove changes, and thus V, which includes the volume of the plenum chamber, changes accordingly. This change is over and above the change in volume caused by change in length of the primaries. These may not be necessary if adequate change of the Helmholtz frequency can be achieved without them.

The rotary engine speed is determined by an engine speed sensor, for example a tachometer, the output of which is fed to a control unit. The control unit determines the degree of rotation required to give optimum results and relays a corresponding signal to a turning device, for example the rotary servo or synchro motor. This device then turns the barrel to the desired position.

A more sophisticated system could utilise a tachometer, the output of which is amplified and fed to a control unit, for example a microcomputer, which would investigate the value of the signal by comparing it with data in an ROM and then signal the corresponding turning current to the turning device. Such a system may include a sample and hold circuit coupled to an analogue to digital converter before the control unit, which would be followed in turn by a digital to analogue converter to give the required signal.

Many modern cars are provided with an electronic fuel and ignition management system under the control of a control unit. In such a case, the air intake system could be coupled up and form an extension to such a management system. In the interest of maximising the efficiency of the engine, the variable geometry air intake system may affect the fuel and ignition requirements and hence a unified control should give best results.

## Claims

1. An intake system for an internal combustion engine comprising an intake tube (5) for supply of air, a plenum chamber (8) in communication with said intake (5), at least one primary tube (11) communicating between said plenum chamber (8) and a respective cylinder of the engine, at least part of the or each primary tube (11) and at least part of said intake being constituted by respective passageways (6, 10) defined between a cylinder and a barrel relatively rotatable therewithin, characterised in that relative rotation in one sense causes the length of all of said passageways (6, 10) simultaneously to decrease progressively from one length to another between a maximum and a minimum length, and relative rotation in an opposite sense causes the length of all of said passageways simultaneously to increase progressively from one length to another between a minimum and a maximum length.

2. An intake system as claimed in claim 1 characterised in that the intake (5) and said at least one primary tube (11) extend substantially tangentially from the cylinder.

3. An intake system as claimed in either claim 1 or claim 2, characterised in that at least part of the interior of the barrel comprises the plenum chamber (8).

4. An intake system as claimed in any one of the preceding claims, characterised in that the volume of the plenum chamber (8) is variable optionally by relative rotation between said barrel (7) and said cylinder (12).

5. An intake system as claimed in any one of the preceding claims, characterised in that the amount of relative rotation is controlled in dependance on the sensed speed of the engine.

## Patentansprüche

1. Lufteinlaßsystem für einen Verbrennungsmotor mit einem Einlaßrohr (5) zur Luftzufuhr, einer Ansaugluftkammer (8) ; die mit dem Einlaßrohr (5) in Verbindung steht, wenigstens einer primären Röhre (11), die die Ansaugluftkammer (8) mit dem jeweiligen Zylinder des Motors verbindet, wobei wenigstens ein Teil der oder jeder primären Röhre (11) und wenigstens ein Teil des Einlaßrohrs aus jeweiligen Durchlässen (6, 10) bestehen, die zwischen einem Zylinder und einer relativ darin drehbaren Walze gebildet sind, dadurch gekennzeichnet, daß eine relative Drehung in einer Richtung ein gleichzeitiges Verringern der Länge aller Durchlässe (6, 10) von einer Länge zu einer anderen zwischen einer maximalen und einer minimalen Länge verursacht und daß eine relative Drehung in einer entgegengesetzten Richtung ein gleichzeitiges Vergrößern der Länge aller Durchlässe (6, 10) von einer Länge zu einer anderen zwischen einer minimalen und einer maximalen Länge verursacht.

2. Einlaßsystem nach Anspruch 1, dadurch gekennzeichnet, daß das Einlaßrohr (5) und die wenigstens eine primäre Röhre (11) sich im wesentlichen tangential von dem Zylinder erstrecken.

3. Einlaßsystem nach Anspruch 1 oder 2, dadurch gekennzeichnet, daß wenigstens ein Teil des Inneren der Walze die Ansaugluftkammer (8) umfaßt.

4. Einlaßsystem nach einem der vorhergehenden Ansprüche, dadurch gekennzeichnet, daß das Volumen der Ansaugluftkammer (8) wahlweise veränderlich ist durch die relative Drehung zwischen der Walze (7) und dem Zylinder (12).

5. Einlaßsystem nach einem der vorhergehenden Ansprüche, dadurch gekennzeichnet, daß der Betrag der relativen Drehung in Abhängigkeit von der gemessenen Motorgeschwindigkeit geregelt wird.

## Revendications

1. Système d'admission pour moteur à combustion interne, comprenant un tube d'admission (5) pour la fourniture d'air, un réservoir d'air (8) en communication avec ladite admission (5), au moins un tube primaire (11) établissant une communication entre ledit réservoir d'air (8) et un cylindre respectif du moteur, au moins une partie du ou de chaque tube primaire (11) et au moins une partie de ladite admission étant constituées par des passages (6, 10) respectifs définis entre un cyclindre et un barillet capable de rotation relative dans celui-ci, caractérisé en ce que la rotation relative dans un sens amène la longueur de tous lesdits passages (6, 10) à décroître simultanément progressivement d'une longueur à une autre entre une longueur maximale et une longueur minimale, et la rotation relative dans un sens opposé amène la longueur de tous lesdits passages à augmenter simultanément progressivement d'une longueur à une autre entre une longueur minimale et une longueure maximale.

2. Système d'admission selon la revendication 1, caractérisé en ce que l'admission (5) et ledit ou lesdits tubes primaires (11) s'étendent sensiblement tangentiellement depuis le cylindre.

3. Système d'admission selon la revendication 1 ou la revendication 2, caractérisé en ce qu'au moins une partie de l'intérieur du barillet comprend le réservoir d'air (8).

4. Système d'admission selon l'une quelconque des revendications précédentes, caractérisé en ce que le volume du réservoir d'air (8) est variable éventuellement par rotation relative dudit barillet (7) et dudit cylindre (12).

5. Système d'admission selon l'une quelconque des revendications précédentes, caractérisé en ce que l'ampleur de la rotation relative est contrôlée en fonction de la vitesse mesurée du moteur.

FIG 1

Fig 2

FIG 3

FIG 4

FIG 5

FIG 6.

EP 0 295 064 B1

FIG 7